# EUROPEAN PATENT APPLICATION

(11) **EP 4 036 740 A1**
(43) Date of publication of application: **03.08.2022**
(21) Application number: 21216954.4
(22) Date of filing: 22.12.2021
(51) Int. Cl.: G06F 11/36, G06F 21/55, H04L 9/40

(54) **INFORMATION SECURITY**

(30) Priority: 27.01.2021 FI 20215089
(71) Applicant: Nokia Solutions and Networks Oy, 02610 Espoo (FI)
(72) Inventor: PAPILLON, Serge, 75014 Paris (FR); EL ABED, Haithem, 91620 Nozay (FR); BOUTIGNY, Francois, 91620 Nozay (FR); MENSAH, Pernelle Cathel Sika, 91620 Nozay (FR)
(74) Representative: Nokia EPO representatives

(57) **Abstract**

According to an example aspect of the present invention, there is provided a method comprising compiling a behavioural baseline database comprising system call behaviours of a computer program, using a first testing process based at least partly on emulated nodes, running a second test of the computer program using live nodes and logging system call behaviour of the computer program during the second test, and determining whether the system call behaviour logged during the second test comprises behaviour deviates from the behavioural baseline database.

## Description

### FIELD

The present disclosure pertains to information security against maliciously behaving programs.

### BACKGROUND

Security of computing and/or communicating systems is paramount as an increasing portion of everyday life moves to the digital domain. Modern software development processes, such as DevOps, involve an increasing share of continuous integration, CI and continuous delivery, CD, methods as well as continuous deployment. These processes work by building automated pipelines between steps of a development project.

In the telecommunication field, these development processes are being introduced for the development of new-generation of telecommunication infrastructures, such as 5G, due to the service-oriented nature of the new infrastructures. 5G systems are standardized by the third generation partnership project, 3GPP. A difference in the telecommunication sector, as compared to the traditional DevOps process, is that a telecommunications software product is deployed, operated and monitored first in a controlled setting in the manufacturer's laboratory to verify that all functionalities function as intended before being deployed in customer infrastructure. The DevOps process can efficiently cover the testing of client-facing services and functionalities.

In the telecommunication field, a major portion of the software product serves other purposes than client-facing functionalities, such as security controls, high availability defence mechanisms and internal QoS monitoring, for example.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided a method comprising compiling a behavioural baseline database comprising system call behaviours of a computer program, using a first testing process based at least partly on emulated nodes, running a second test, using live nodes, of the computer program and logging system call behaviour of the computer program during the second test, and determining whether the system call behaviour logged during the second test comprises behaviour deviating from the behavioural baseline database.

According to a second aspect of the present disclosure, there is provided an apparatus comprising at least one processing core, at least one memory including computer program code, the at least one memory and the computer program code being configured to, with the at least one processing core, cause the apparatus at least to compile a behavioural baseline database comprising system call behaviours of a computer program, using a first testing process based at least partly on emulated nodes, run a second test of the computer program, using live nodes, and logging system call behaviour of the computer program during the second test, and determine whether the system call behaviour logged during the second test comprises behaviour deviating from the behavioural baseline database.

According to a third aspect of the present disclosure, there is provided the apparatus according to the second aspect, wherein the at least one memory and the computer program code are configured to, with the at least one processing core, further cause the apparatus to create a report concerning at least one further test case for the first testing as a response to the system call behaviour logged during the second test comprising behaviour deviating from the behavioural baseline database.

According to a fourth aspect of the present disclosure, there is provided the apparatus according to second or the third aspect, wherein the at least one memory and the computer program code are configured to, with the at least one processing core, further cause the apparatus to compile a further behavioural baseline database of system call behaviour of the computer program, using the first testing process, based at least partly on the emulated nodes, enhanced to reproduce system call behaviours seen during the second test but absent from the behavioural baseline database, and use the further behavioural baseline database to perform intrusion detection in a live computing system, or include the further behavioural baseline database in a same software package with the computer program to enable the intrusion detection when the computer program is run.

According to a fifth aspect of the present disclosure, there is provided the apparatus according to any of the second to fourth aspects, wherein the first testing process is an integration testing process, and wherein the second test is a validation test.

According to a sixth aspect of the present disclosure, there is provided the apparatus according to the fifth aspect, wherein the computer program is a software suite configured to control functioning of at least a part of a cellular communication system, where the emulated nodes comprise emulated cellular user equipments and where the live nodes comprise actual cellular user equipments.

According to a seventh aspect of the present disclosure, there is provided the apparatus according to the sixth aspect, wherein the at least the part of the cellular communication system comprises at least a part of a fifth generation cellular communication system, as specified by the third generation partnership project.

According to an eighth aspect of the present disclosure, there is provided the apparatus according to any of the second to the seventh aspects, wherein the behavioural baseline database comprises, associated together, thread identifiers and system call sequences invoked by the respective threads during the first testing process.

According to a ninth aspect of the present disclosure, there is provided the apparatus according to any the second to the eighth aspects, wherein the behavioural baseline database comprises, for threads observed in the first testing process, further information associated with individual ones of the observed threads, the further information comprising at least one of the following: a thread name, a thread used stack size, a timing information relating to the thread and sequence information indicating a sequence in which the observed threads are observed.

According to a tenth aspect of the present disclosure, there is provided the apparatus according to any of the second to the ninth aspects, wherein the at least one memory and the computer program code are configured to, with the at least one processing core, further cause the apparatus to include at least one of the following in a set of deviations observed between the behavioural baseline database and behaviour observed during the second test: logs of software components tested in the second test before and up to the time the deviation was observed, traces of software components tested in the second test before and up to the time the deviation was observed and/or a timestamp with thread information.

According to an eleventh aspect of the present disclosure, there is provided the apparatus according to any of the fourth aspect or any of the fifth to tenth aspects as dependent on the fourth aspect, wherein the apparatus is configured to perform the intrusion detection at least in part by detecting that at least one first thread observed during the intrusion detection deviates from the system call behaviour in the further behavioural baseline database, and by flagging the at least one first thread for a security action.

According to a twelfth aspect of the present disclosure, there is provided the apparatus according to the eleventh aspect, wherein the security action comprises at least one of the following: logging the at least one first thread in a log, providing an indication to human operators of the at least one first thread, reducing an operating priority of the at least one first thread and terminating the at least one first thread.

According to a thirteenth aspect of the present disclosure, there is provided the apparatus according to any of the fourth aspect or any of the fifth to twelfth aspects as dependent on the fourth aspect, wherein the apparatus is configured to, before compiling the further behavioural baseline database, compile at least one intermediate behavioural baseline database in an iterative process wherein deviations seen in the second test trigger enhancement of the first testing process, the further behavioural baseline database being generated as a result of the iterative process.

According to a fourteenth aspect of the present disclosure, there is provided the apparatus according to the thirteenth aspect, wherein the apparatus is configured to perform the iterative process by compiling at least three intermediate behavioural baseline databases.

According to a fifteenth aspect of the present disclosure, there is provided an apparatus comprising means for compiling a behavioural baseline database comprising system call behaviours of a computer program, using a first testing process based at least partly on emulated nodes, means for running a second test of the computer program using live nodes and logging system call behaviour of the computer program during the second test, and means for determining whether the system call behaviour logged during the second test comprises behaviour deviating from the behavioural baseline database.

According to a sixteenth aspect of the present disclosure, there is provided a non-transitory computer readable medium having stored thereon a set of computer readable instructions that, when executed by at least one processor, cause an apparatus to at least compile a behavioural baseline database comprising system call behaviours of a computer program, using a first testing process based at least partly on emulated nodes, run a second test of the computer program using live nodes and logging system call behaviour of the computer program during the second test, and determining whether the system call behaviour logged during the second test comprises behaviour deviating from the behavioural baseline database.

According to a seventeenth aspect of the present disclosure, there is provided a computer program configured to cause an apparatus to perform at least the following, when run: compile a behavioural baseline database comprising system call behaviours of a computer program, using a first testing process based at least partly on emulated nodes, run a second test of the computer program using live nodes and logging system call behaviour of the computer program during the second test, and determining whether the system call behaviour logged in the second test comprises behaviour deviating from the behavioural baseline database.

### BRIEF DESCRIPTION OF THE DRAWINGS

FIGURE 1 illustrates an example software development pipeline;
FIGURE 2 illustrates an example method in accordance with at least some embodiments of the present invention;
FIGURE 3 illustrates an example apparatus capable of supporting at least some embodiments of the present invention;
FIGURE 4 is a flow graph in accordance with at least some embodiments of the present invention, and
FIGURE 5 is a flow graph of a method in accordance with at least some embodiments of the present invention.

### EMBODIMENTS

An enhanced intrusion detection system is obtained in performing validation tests in a controlled environment, such that behavioural deviations from program behaviour seen in integration testing of the tested program can inform and enhance a new round of integration testing, to enhance the understanding of program behaviour. The tested program may comprise a multi-thread program, for example. As a result, since behaviour of the tested program is understood in more detail and test cases are more comprehensive, unauthorized or malicious behaviour is easier to flag as such since benign behaviour is more precisely defined as a result of the enhanced integration testing process. In detail, the enhanced integration testing process yields a behavioural baseline database against which behaviour of observed threads may be compared to determine if the threads are behaving in potentially malicious ways.

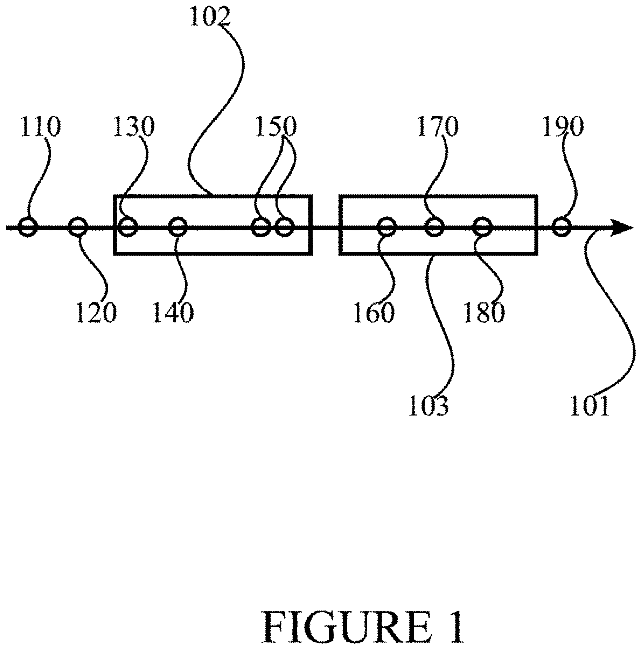

FIGURE 1 illustrates an example software development pipeline. The aim of the development is to produce and/or maintain a computer program, which may comprise plural modules, for example. The pipeline 101 comprises a coding phase 110, a committing phase 120, a continuous integration, CI, pipeline 102 which comprises a build phase 130, unit testing 140 of parts of the program separately, and integration tests 150. Further, the pipeline comprises a continuous delivery, CD, pipeline comprising a review phase 160, a staging phase 170 and a validation test 180. Release to production 190 takes place after CD pipeline 103. The various phases may be performed at least partly concurrently, and in some cases individual ones of the phases may be omitted, for example the review phase 160 may sometimes be omitted. In general, integration testing may comprise testing where individual software modules are combined and tested as a group. Validation testing aims to test a software package in an environment close to a realistic deployment environment. In some cases, validation testing may be referred to as verification testing.

An issue facing automated development methodologies is test case coverage of the computer program to be developed. Ideally 100% of the program behaviour would be tested. In real life, test cases rarely cover each and every behaviour of every branch of the code of the program. For example, the code produced to take care of exceptional fail scenarios may be difficult to test in an automated methodology, as are fail-safe complete sequences. Unit tests 140, where tools exist for developers to see and measure what code has been triggered, are in this sense different from integration tests 150, that aim at testing every behavior of the overall program, including interactions between units of the program. Further, it may be difficult to know the extent of coverage of test cases used in integration testing 150. Poorly tested programs, especially in the telecommunication industry, are not only harder to maintain but may also delay deployment time, jeopardize contract fulfilment, provoke penalties, and impair relation with customers. Further, importantly, poorly tested programs produce security vulnerabilities.

In industries where security is important, such as telecommunication and medical software, for example, an increase in attack vectors and zero-day attacks has been observed. As attack detection is not ideally efficient, intrusion detection systems have been developed to detect deviations from known behaviour. The known behaviour may be learned in a controlled environment, such as a computing substrate in a manufacturer's laboratory, for example. A challenge arises when during the learning of the known behaviour some of the overall system behaviour is not observed. This will lead to high rates of false positives detection when in operation, since normal system behaviour will be flagged as anomalous. It is consequently of considerable interest to characterize the known, benign behaviour of the computer program as accurately as possible.

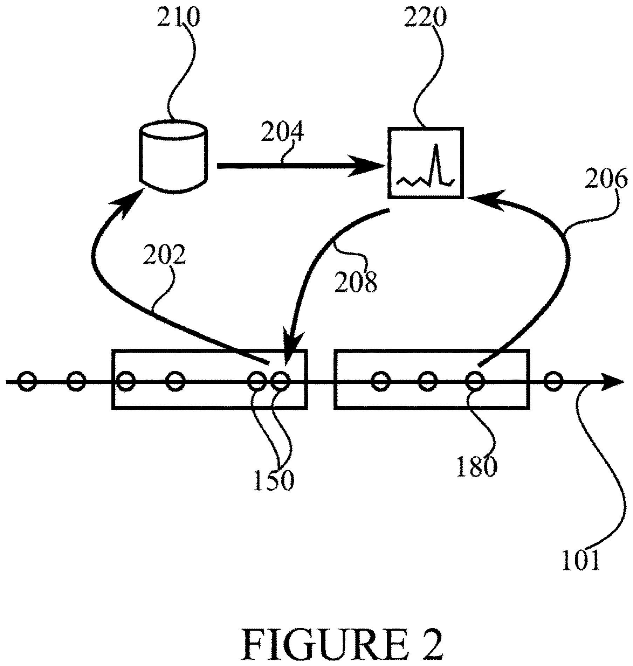

FIGURE 2 illustrates an example method in accordance with at least some embodiments of the present invention. Pipeline 101 corresponds to pipeline 101 in FIGURE 1. Like numbering denotes like functionality as in FIGURE 1. Some phases of pipeline 101 may be omitted in the process of FIGURE 2. Relevant for the process of FIGURE 2 are at least integration tests 150 and validation test 180.

During integration testing 150, a monitoring process 202 is performed to log at least system calls made by threads during integration testing 150. A system call is a request sent to the kernel of the operating system. System call behaviour of threads is compiled into behavioural baseline database 210, which will be referred to herein as database 210 for the sake of brevity. Database 210 comprises information on individual threads running during integration testing 150, and system calls made by these threads, recorded in the database per thread. Database 210 may store system call sequences per thread, indicating which system calls were invoked by the specific threads, and the order in which the system calls were invoked by the specific thread. Duplicates of the same thread, such as duplicate worker threads, may be omitted from database 210 such that database 210 will have a set of thread types and data describing, separately, behaviour of each thread type. The system call behaviour may be collected using an automated test environment used to run the integration testing and/or by using a kernel probe, for example. An example of a kernel probe is a Berkeley packet filter, eBPF, probe.

In some embodiments, database 210 comprises also further information concerning each observed thread or thread type, such as, for example, at least one of the following: a thread name, a thread used stack size, a timing information relating to the thread and sequence information indicating a sequence in which the observed threads are observed. Timing information may indicate, for example, how long the thread remains active between its launching and its termination. A sequence in which the observed threads are observed may indicate which thread is a child or parent of another specific thread or thread type, and/or an indication that a certain thread type is launched within a predetermined time interval, such as 10 milliseconds or 100 milliseconds, for example, of launch of another, specific, thread type. The further information may also include indications that certain thread types are launched during specific time windows, and certain other thread types are launched during other specific time windows.

The integration testing 150 may be performed using emulated nodes which interact with the computer program being tested. The emulated nodes may be emulated web browsers or emulated user equipments, UEs, of cellular communication systems, for example. Alternatively, rather than a cellular or non-cellular communication system, the computer program may be configured to perform at least a part of the functioning of a cloud computing or cloud service platform. Integration testing 150 may be based on set of test cases intended to invoke all functionalities of the program being tested, to produce a comprehensive database 210. However, ensuring that all functionality of the program is invoked in integration testing 150 is a challenge in case the program is complex, as the set of test cases may not be diverse enough to stimulate the program to go through all of its functionality. In the case that the test set is too narrow, a part of the program will remain untested in integration testing 150 and database 210 will not contain all the legitimate, benign behaviour of the program.

During validation testing 180, which may be performed in a secure environment in which it is known that no malicious software is present, once more the behaviour of the program is monitored, as it was during integration testing 150. Validation testing 180 mays use live nodes, such as live web browsers with real users or running on automated programs, or live UEs of a cellular communication network. The monitoring 206 of the behaviour of the program during validation testing 180 is used to gather information of the program's behaviour, which is compared to behaviour recorded in database 210. The contents of database 210 are provided to determining of deviation set 220 in phase 204. In other words, it is checked, if program behaviour is detected during validation testing 180, which was not observed during integration testing 150. In case such behaviour is detected, deviation set 220 is a non-empty set. The behaviours may be compared like for like, in other words, the types of behaviour monitored in validation testing 180 may be the same as was monitored in integration tests 150.

Overall, the fact that validation testing 180 is performed in the secure environment is here leveraged to dependably enable determination of the deviations 220. In case the validation test was performed in a non-secured environment, it would be more difficult to determine whether any deviations from database 210 are due to an overly narrow test set for integration testing or from maliciously behaving software.

Deviation set 220 may be a data structure, wherein a thread identifier is stored in association with system call and, optionally, also other behaviour of the thread which behaved in a manner not recorded in database 210. Also metadata, and/or a timestamp may be recorded with the thread information in the deviations set 220. The metadata may comprise, for example, a name, the function tested and/or parameters. The metadata may further comprise, for example, logs and/or traces of software components tested in the validation test before and up to the time the deviation was observed. The deviation set 220 constitutes effectively a proof of lack of integration test coverage, as it reflects behaviour of the program which was not invoked during integration testing 150 but which was seen in the validation test 180, run in a secure environment. The more comprehensive is the validation test 180, the more comprehensive is the deviation set 220. In other words, if the integration testing is insufficiently diverse, a well conducted validation test will uncover the insufficiency of the integration testing more comprehensively.

In some embodiments, each deviation in deviation set 220 is classified as a potential bug for coders to correct in a subsequent round of software development.

The contents of deviation set 220 may be indicated to operators, for example in a dashboard type display. The system calls, and optionally also other behaviour, in deviation set 220 may indicate which aspects of the program were not tested in integration testing 150. For example, if it is known that a specific kind of system call is only invoked by one function in the program, and this system call shows up in the data of deviation set 220, it may be determined, for example automatically, that this specific function was not invoked by the integration test set.

In phase 208, the integration test set is expanded as a response to the contents of deviation set 220. In at least some embodiments, a report concerning at least one further integration test case is created as a response to the system call behaviour logged during the validation test comprising behaviour deviating from the behavioural baseline database. The report may indicate one or more of a source code structure, such as a loop, a function, an object-oriented class, an event, and an interface, which may contribute to the behavioral deviation(s). The information indicated by the report may be found in the corresponding validation test cases that cause the deviations, for example. The report may inform enhancement of the integration testing 150. For example, test cases may be added to the integration test set automatically based on the system call behaviour recorded in deviation set 220. Alternatively, a human operator may add the test cases to the integration test set. A new integration test process is run using the expanded test set, amounting to an enhanced integration testing process 150. The enhanced integration testing process is monitored as before, to produce a further behavioural baseline database 210, or further database 210 in brief. In case further database 210 contains the behaviour in deviation set 220, the expanding of the integration test set has been successful in capturing the previously un-tested functionality of the program. In case further database 210 contains in part the behaviour in deviation set 220, the expanding of the integration test set has been partly successful in capturing the previously un-tested functionality of the program.

The program is then advanced once more to validation testing 180, and a new deviation set 220 is derived by comparing observed behaviour of the program to enhanced database 210. In case deviations are still detected, phase 208 may be performed again, to once more expand the integration test set with at least one further test case in a bid to replicate the full behaviour detected in validation testing 180 also in integration testing 150. On the other hand, deviations from the previous validation test 180 which do not re-occur have been successfully covered in the enhanced integration testing. As such, the process may be operated in an iterative manner until deviation set 220 is empty, or has fewer than a threshold number of deviations amounting to a stop condition.

Once the deviations have been sufficiently controlled, using one or more iterations of the process illustrated in FIGURE 2, the further database 210 from the final iteration of the process may be used in an intrusion detection mechanism. In detail, by comparing behaviour of one or more copies of the program in a live environment, it may be determined whether one or more threads in the live environment behave in a manner, or manners, not comprised in the further database 210. Such threads may then be flagged for a security action, such as logging, de-prioritising or termination, for example. In some embodiments, a separate determination is made concerning a thread deviating from behaviour in further database 210 and the security action is selected from a list of security actions based on a result of the separate determination. For example, in some embodiments, if the deviating thread behaves in manner which meets certain criteria, it is logged in a log file but if it behaves in a manner that deviated from both further database 210 and the criteria, it is terminated.

In some embodiments, the further database 210 from the final, or only, iteration of the process of FIGURE 2 may be delivered together with the program for use in intrusion detection when the program is run. As such, the further database may be included in a same software package with the computer program to enable the enhanced intrusion detection when the computer program is later run in a live setting.

In some embodiments, once a specific deviation has been used to expand the integration test set and consequently the specific deviation is no longer seen in a subsequent validation test as a deviation, this deviation is associated with a counter which is incremented each time the validation test is run without the deviation being detected. In these embodiments, when the counter reaches a preconfigured counter threshold, the deviation is then considered fully resolved responsive to the counter reaching the preconfigured counter threshold.

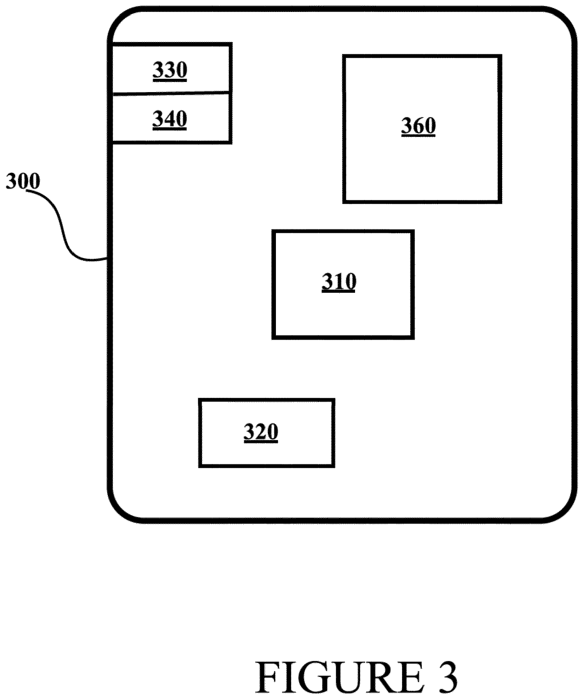

FIGURE 3 illustrates an example apparatus capable of supporting at least some embodiments of the present invention. Illustrated is device 300, which may comprise, for example, computing substrate used to test and/or run the multi-thread computer program. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices Corporation. Processor 310 may comprise at least one Intel Xeon and/or AMD Threadripper processor. Processor 310 may comprise at least one application-specific integrated circuit, ASIC. Processor 310 may comprise at least one field-programmable gate array, FPGA. Processor 310 may be means for performing method steps in device 300, such as compiling, running and using, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a server, to perform various function(s) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure intruder detection parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

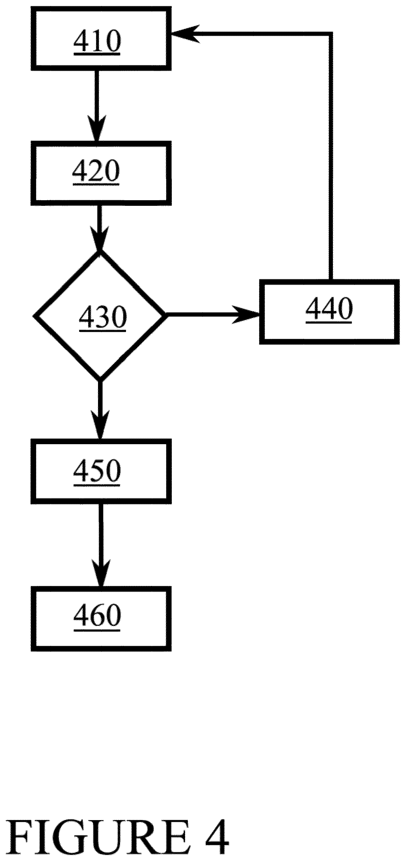

FIGURE 4 is a flow graph in accordance with at least some embodiments of the present invention. In phase 410 integration testing of a multi-thread computer program is conducted. As described above, in connection with performing the integration testing, a database 210 is compiled of thread behaviours observed during the integration testing. Integration testing may be conducted with emulated nodes interacting with the computer program.

From integration testing the process advances to phase 420 where validation testing is conducted. During validation testing, behaviour of the computer program is observed and behaviour of threads is recorded, for example in terms of system calls made by the threads. Validation testing may be conducted with live nodes interacting with the computer program. As described above, a deviation set 220 is compiled by including in the deviation set threads, and behaviour of the threads, which behave in a manner not present in the database 210 compiled in connection with the integration testing.

In phase 430 it is determined, if the deviation set 220 is short enough to fulfil a stop condition. In particular, the stop condition may be that deviation set 220 is empty, that is, comprising zero threads, or that deviation set 220 has fewer than a preconfigured number of threads. In case deviation set 220 fails to fulfil the stop condition, processing advances to phase 440.

In phase 440, at least one additional integration test case is determined responsive to the contents of the deviation set 220. In particular, the at least one additional integration test case may be automatically generated based on system call types present in deviation set 220. Processing advances from phase 440 back to phase 410, where the integration testing is re-performed using also the at least one additional integration test case determined in phase 440. This amounts to enhanced integration testing. The enhanced integration testing is likely to reproduce at least some of the behaviour included in the deviation set 220, and this is included in the further database 210 compiled in connection with the enhanced integration testing process.

On the other hand, if the stop condition is met in phase 430, processing advances to phase 450. In phase 450, the further database 210 is established as the baseline behavioural database of the computer program. Subsequently, in phase 460, the established baseline behavioural database of the computer program is used in intrusion detection, yielding the benefit and technical effect that the intrusion detection process is more accurate, since the legitimate, benign behaviour is more precisely defined. Furthermore, as the deviation set 220 was used to enhance integration testing, the intrusion detection mechanism produces fewer false positives, enabling more meaningful reaction to findings which are flagged during the intrusion detection. As a result, information security is improved since malicious programs have less possibilities to masquerade as legitimate threads.

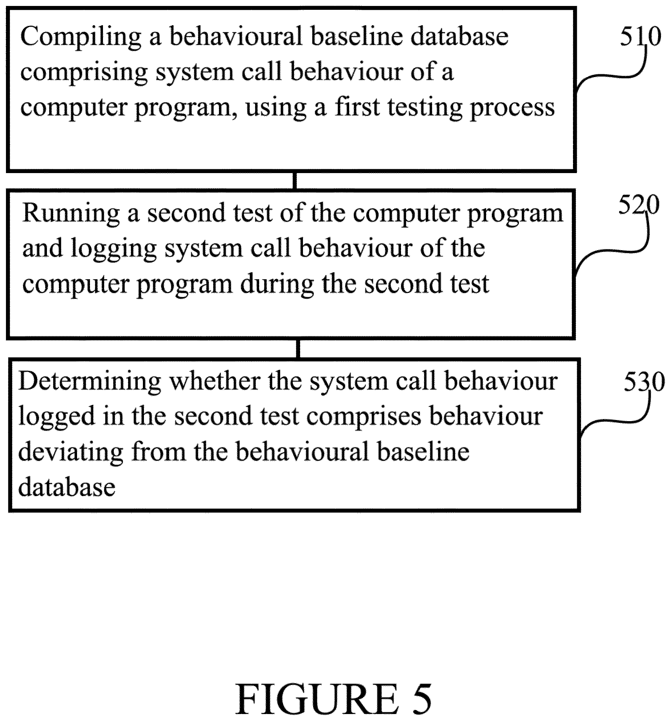

FIGURE 5 is a flow graph of a method in accordance with at least some embodiments of the present invention. The phases of the illustrated method may be performed in a computing substrate such as a server comprising a memory and at least one processor, for example.

Phase 510 comprises compiling a behavioural baseline database comprising system call behaviours of a computer program, using a first testing process. Phase 520 comprises running a second test of the computer program and logging system call behaviour of the computer program during the second test. The first testing process may comprise an integration testing process, and the second test may comprise a validation test. The validation test may be a software validation test. Phase 530 comprises determining whether the system call behaviour logged in the validation test comprises behaviour deviating from the behavioural baseline database. Phase 530 may be optional or implicit in further phases, where present.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in information security, such as, for example, communication network security.

### ACRONYMS LIST

- 3GPP: third generation partnership project
- CD: continuous delivery
- CI: continuous integration
- IDS: intrusion detection system
- UE: user equipment

### REFERENCE SIGNS LIST

| | |
|---|---|
| 101 | pipeline |
| 102 | CI pipeline |
| 103 | CD pipeline |
| 110 | coding phase |
| 120 | committing phase |
| 130 | build phase |
| 140 | unit testing phase |
| 150 | integration testing phase |
| 160 | review phase |
| 170 | staging phase |
| 180 | validation test |
| 190 | release to production |
| 202 | monitoring of integration testing |
| 206 | monitoring of validation test |
| 204 | provision of database 210 |
| 208 | expansion of integration test set |
| 210 | database |
| 220 | deviation set |
| 300 - 360 | structure of the device of FIGURE 3 |
| 410 - 460 | phases of the method of FIGURE 4 |
| 510 - 540 | phases of the method of FIGURE 5 |

## Claims

1. A computer-implemented method comprising:
- compiling a behavioural baseline database comprising system call behaviours of a computer program, using a first testing process based at least partly on emulated nodes;
- running a second test of the computer program using live nodes and logging system call behaviour of the computer program during the second test, and
- determining whether the system call behaviour logged during the second test comprises behaviour deviating from the behavioural baseline database.

2. The method according to claim 1, further comprising creating a report concerning at least one further test case for the first testing process as a response to the system call behaviour logged during the second test comprising behaviour deviating from the behavioural baseline database.

3. The method according to claim 1 or 2, further comprising:
- compiling a further behavioural baseline database of system call behaviour of the computer program, using the first testing process enhanced to reproduce system call behaviours seen during the second test but absent from the behavioural baseline database, and
- using the further behavioural baseline database to perform intrusion detection in a live computing system, or including the further behavioural baseline database in a same software package with the computer program to enable the intrusion detection when the computer program is run.

4. The method according to any of claims 1 - 3, wherein the first testing process is an integration testing process, and wherein the second test is a validation test.

5. The method according to claim 4, wherein the computer program is a software suite configured to control functioning of at least a part of a cellular communication system, where the emulated nodes comprise emulated cellular user equipments and where the live nodes comprise actual cellular user equipments.

6. The method according to claim 5, wherein the at least the part of the cellular communication system comprises at least a part of a fifth generation cellular communication system, as specified by the third generation partnership project.

7. The method according to any of claims 1 - 6, wherein the behavioural baseline database comprises, associated together, thread identifiers and system call sequences invoked by the respective threads during the first testing process.

8. The method according to any of claims 1 - 7, wherein the behavioural baseline database comprises, for threads observed in the first testing process, further information associated with individual ones of the observed threads, the further information comprising at least one of the following: a thread name, a thread used stack size, a timing information relating to the thread and sequence information indicating a sequence in which the observed threads are observed.

9. The method according to any of claims 1 - 8, further comprising including in a set of deviations observed between the behavioural baseline database and behaviour observed during the second test at least one of the following: logs of software components tested in the second test before and up to the time the deviation was observed, traces of software components tested in the second test before and up to the time the deviation was observed and/or a timestamp with thread information.

10. The method according to claim 3, wherein performing the intrusion detection comprises detecting that at least one first thread observed during the intrusion detection deviates from the system call behaviour in the further behavioural baseline database, and flagging the at least one first thread for a security action.

11. The method according to claim 10, wherein the security action comprises at least one of the following: logging the at least one first thread in a log, providing an indication to human operators of the at least one first thread, reducing an operating priority of the at least one first thread and terminating the at least one first thread.

12. The method according to claim 3, wherein, before compiling the further behavioural baseline database, at least one intermediate behavioural baseline database is compiled in an iterative process wherein deviations seen in the second test trigger enhancement of the first testing process, the further behavioural baseline database being generated as a result of the iterative process.

13. The method according to claim 12, wherein performing the iterative process comprises compiling at least three intermediate behavioural baseline databases.

14. An apparatus comprising means for performing a method in accordance with at least one of claims 1 - 13.

15. A computer program configured to cause an apparatus to perform a method in accordance with at least one of claims 1 - 13, when run on a computer.
